**Europäisches Patentamt**

**European Patent Office**

**Office européen des brevets**

(19)

(11) Numéro de publication: **0 061 960**
**B1**

(12) ## FASCICULE DE BREVET EUROPEEN

(45) Date de publication du fascicule du brevet:
**01.08.84**

(21) Numéro de dépôt: **82400492.3**

(22) Date de dépôt: **18.03.82**

(51) Int. Cl.³: **B 60 T 8/14,** B 60 T 8/26,
B 60 T 11/34

(54) Correcteur de freinage pour véhicule automobile asservi à la décélération.

(30) Priorité: **18.03.81 FR 8105399**

(43) Date de publication de la demande:
**06.10.82 Bulletin 82/40**

(45) Mention de la délivrance du brevet:
**01.08.84 Bulletin 84/31**

(84) Etats contractants désignés:
**DE GB IT**

(56) Documents cités:
**EP - A - 0 019 509**
**FR - A - 2 428 553**
**FR - A - 2 437 962**
**US - A - 2 148 769**
**US - A - 3 795 424**

(73) Titulaire: **SOCIETE ANONYME D.B.A., Centre Paris Pleyel, F-93521 St-Denis Cédex 01 (FR)**

(72) Inventeur: **Chéron, Jean-Marc, 7 rue Maincourt Résidence de la Pommeraie, F-77230 Longperrier (FR)**
Inventeur: **Carré, Jean-Jacques, 59 Boulevard de l'Est, F-93340 Le Raincy (FR)**

(74) Mandataire: **Poidatz, Emmanuel et al, Service Brevets Bendix 44 rue François 1er, F-75008 Paris (FR)**

# Description

La présente invention se rapporte aux correcteurs de freinage pour véhicules automobiles, du type asservi à la décélération, et plus particulièrement à un correcteur du type décrit dans la demande de brevet français No 78.28550, publiée sous le No 2437962.

Ce correcteur connu comprend un boîtier dans lequel sont définies une chambre d'entrée, une chambre de sortie et une chambre pilote, un piston de correcteur s'étendant dans la chambre d'entrée et dans la chambre de sortie et étant rappelé vers cette dernière par un ressort de correcteur, un premier passage entre la chambre d'entrée et la chambre de sortie équipé d'une valve de correcteur commandée par ledit piston de correcteur, un piston pilote s'étendant dans la chambre de sortie et dans la chambre pilote et commandant également ladite valve de correcteur, un second passage entre la chambre d'entrée et la chambre pilote équipé d'une valve pilote commandée par un dispositif décélérométrique, ledit dispositif comprenant une masse sensible à la décélération du véhicule et rappelée par des moyens élastiques vers une position correspondant à l'ouverture de ladite valve pilote, et des moyens sensibles à la pression de freinage pour modifier le tarage desdits moyens élastiques en fonction de cette pression.

Dans le cas du correcteur décrit dans la demande précitée, ces moyens comprennent un plongeur soumis à la pression dans la chambre d'entrée pour se déplacer à l'encontre d'un ressort antagoniste et modifier le tarage desdits moyens élastiques en fonction de cette pression.

En bref, on remarque qu'une telle structure nécessite de prévoir deux composants supplémentaires, à savoir: le plongeur et son ressort antagoniste.

Au contraire, selon la présente invention, un correcteur du type spécifié est caractérisé en ce que lesdits moyens élastiques sont interposés entre ledit piston de correcteur et ladite masse sensible à la décélération.

Comme il sera apprécié à la lecture de la description qui va suivre, une telle disposition permet d'assurer une modification du tarage des moyens élastiques en fonction de la pression de freinage sans adjonction d'une structure supplémentaire.

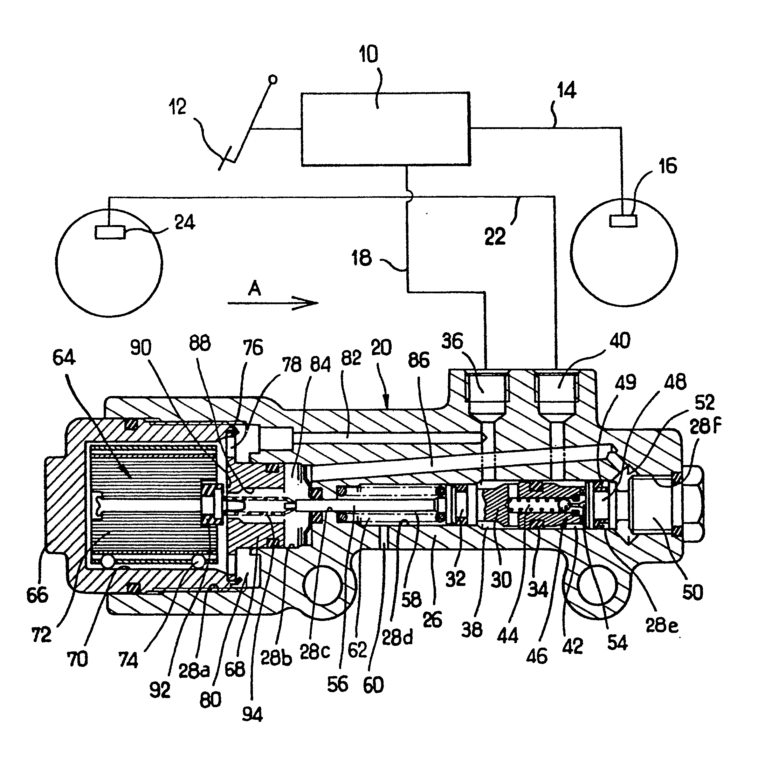

L'invention sera maintenant décrite en se référant à la figure unique des dessins annexés qui est une représentation schématique d'une installation de freinage pour véhicule automobile, comprenant un correcteur de freinage selon l'invention, ce dernier étant représenté en coupe longitudinale.

Comme représenté, l'installation de freinage comprend un maître cylindre 10 dont la mise en œuvre s'effectue au moyen d'une pédale 12. Un premier conduit 14 relie le maître cylindre à un ou plusieurs freins de roue avant 16 du véhicule. Un second conduit 18 relie le maître cylindre 10 à un correcteur de freinage 20 qui sera décrit en détail ultérieurement; un troisième conduit 22 relie enfin le correcteur 20 à un ou plusieurs freins de roues arrière 24 du véhicule.

Le correcteur de freinage 20 comprend un boîtier 26 percé d'un alésage 28 formé de six parties successives référencées 28a, 28b, 28c, 28d, 28e, 28f. Les parties 28a, 28b et 28c ont des diamètres progressivement décroissants, tandis que les parties 28c, 28d, 28e et 28f ont des diamètres progressivement croissants.

Un piston étagé 30 ou piston de correcteur est monté coulissant de manière étanche dans les parties d'alésage 28d et 28e par l'intermédiaire de portées munies de joints 32 et 34. On notera que le boîtier 26 comporte un orifice d'entrée 36, en liaison avec le conduit 18, débouchant dans une chambre d'entrée 38 définie dans la partie d'alésage 28e, entre les joints 32 et 34, et un orifice de sortie 40, relié au conduit 22, débouchant dans une chambre de sortie 42, définie dans la partie d'alésage 28e, au-delà du joint 34. Dans le piston 30 est défini un passage 44 mettant en communication les deux chambres d'entrée et de sortie 38 et 42. Dans le passage 44 est montée une valve à bille 46, ou valve de correcteur, dont le siège est porté par le piston et se situe du côté de la chambre de sortie 42. Dans la partie d'alésage 28e est également monté coulissant, de manière étanche, un piston pilote 48 dont la face adjacente au piston de correcteur 30 constitue une paroi de fermeture pour la chambre de sortie 42, et dont la face opposée délimite, conjointement avec un bouchon 50, monté dans la partie d'alésage 28f, une chambre pilote 52. De la face du piston pilote 48 située du côté du piston de correcteur 30, se projette un doigt 54 susceptible de soulever la bille de la valve 46 de son siège, comme il sera expliqué plus loin. L'étanchéité autour du piston est assurée par un joint à lèvre 49.

A l'extrémité opposée au piston pilote 48, le piston de correcteur 30 comporte un prolongement de petit diamètre 56, reçu en coulissement étanche dans la partie d'alésage 28c. Dans la partie d'alésage 28d située entre la partie d'alésage 28c et le joint 32 est définie une chambre atmosphérique 58, reliée à l'atmosphère par un passage 60 et cette chambre abrite un ressort 62 dont le rôle est de solliciter le piston de correcteur 30 en direction du piston pilote 48 jusque dans une position de repos dans laquelle le piston de correcteur 30 est en appui contre le piston pilote 48 et ce dernier en appui contre le bouchon 50. On remarque que dans cette position, le doigt 54 du piston pilote 48 maintient la valve à bille 46 dans sa position ouverte.

Dans les parties d'alésage 28a et 28b est monté un dispositif décélérométrique 64 de la manière suivante:

Un corps creux 66 est monté de manière étanche dans la partie d'alésage 28a, ce corps comporte une projection 68 montée de manière étanche dans la partie d'alésage 28b. A l'intérieur du corps 66 est définie une cavité cylindrique 70 dans laquelle est montée coulissante une masse d'inertie 72 par l'intermédiaire de roulements à cages 74, préférablement disposés suivant trois génératrices décalée de 120°. La projection 68 comporte une bride radiale 76 fixée au corps 66 proprement dit, par exemple comme représenté, par sertissage. La bride 76 comporte des ouvertures 78 permettant la mise en communication de la cavité 70 et d'un volume 80, défini entre le corps 66, la partie d'alésage 28a et la projection 68. Le volume 80 est mis en communication avec l'orifice d'entrée 36 par un passage 82. De la sorte, la cavité 70 est mise en communication directe avec la chambre d'entrée 38. Par ailleurs le volume 84 défini entre la projection 68, la partie d'alésage 28b et le prolongement 56 du piston de correcteur est mis en liaison avec la chambre pilote 52 par un passage 86. De la sorte ce volume 84 et la chambre pilote 52 constituent une entité unique qui sera convenu d'appeler dans la suite de cet exposé chambre pilote.

Dans la projection 68 est ménagé un passage 88 entre la cavité 70 et le volume 84. Ce passage se termine du côté de la cavité 70 par un siège de valve 90 et la masse d'inertie 72 porte un obturateur de valve 92 situé en regard du siège de valve 90. L'ensemble siège 90 et obturateur 92 sera appelé valve pilote. Enfin, un ressort de commande 94 est interposé entre l'extrémité du prolongement 56 du piston de correcteur 30 et la masse d'inertie 72.

Le correcteur 20 est monté horizontalement sur le véhicule, de la manière représentée sur la figure, c'est-à-dire le bouchon 50 orienté vers l'avant du véhicule, symbolisé par la flèche A. Au repos tous les éléments du correcteur occupent les positions dans lesquelles ils sont représentés à la figure, le ressort 62 repoussant le piston de correcteur 30 en appui contre le piston pilote 48 et ce dernier en appui contre le bouchon 50, la valve à bille 46 étant de ce fait ouverte et mettant en communication les orifices d'entrée et de sortie 36 et 40. A l'autre extrémité, le ressort 94 repousse dans la masse d'inertie 72 en appui au fond du corps 66, position dans laquelle l'obturateur de valve 92 est éloigné de son siège 90, mettant ainsi en communication la chambre d'entrée 38 et la chambre pilote 52 via le passage 82, le volume 80, les ouvertures 78, la cavité 70, le passage 88, le volume 84 et enfin le passage 86.

Le correcteur qui vient d'être décrit fonctionne de la manière suivante:

Lors d'une application de freinage par enfoncement de la pédale 12, le maître cylindre 10 délivre du fluide sous pression d'une part dans le conduit 14 pour mettre en œuvre les freins avant 16 du véhicule et d'autre part dans le conduit 18 pour mettre en œuvre les freins de roue arrière 24 du véhicule. Le fluide sous pression pénétrant dans le correcteur 20 par l'orifice d'entrée 36 est transmis d'une part à la cambre d'entrée 38 et d'autre part à la cavité 70 du dispositif décélérométrique. La valve 46 étant ouverte il existe une libre communication entre la chambre d'entrée et la chambre de sortie 42 via le passage 44 du piston 30. Dans cette situation le correcteur 20 délivre à son orifice de sortie 40 du fluide sous une pression de sortie égale à la pression d'entrée, ce fluide étant acheminé par le conduit 22 aux freins de roues arrière 24.

Dans une première phase, tant que la force exercée par la pression d'entrée sur la surface du joint 32 reste inférieure à la force de tarage du ressort 62, le piston de correcteur 30 et le piston pilote 48 restent immobiles, la valve à bille 46 reste ouverte et la pression de sortie régnant à l'orifice 40 reste égale à la pression d'entrée régnant à l'orifice d'entrée 36.

Dans une seconde phase, lorsque le niveau de la pression d'entrée a atteint un seuil suffisant pour permettre au piston de correcteur 30 de se déplacer à l'encontre du ressort 62, on constate que ce mouvement du piston 30 provoque la fermeture de la valve à bille 46 et que l'accroissement de la pression régnant dans la chambre de sortie 42 est momentanément stoppée. Dans cette situation, le piston pilote 48, pour autant que le détecteur décélérométrique 64 n'ait pas encore fonctionné, comme il sera expliqué plus loin, se trouve soumis à une différentielle de pression qui le rappelle en direction du piston 30, ce qui provoque la réouverture de la valve 46 et établit l'égalité entre la pression de sortie à l'orifice 40 et la pression d'entrée à l'orifice 36. On remarque que durant cette seconde phase la valve 46 est constamment en équilibre, à la limite de la fermeture. Naturellement l'égalité entre les pressions d'entrée et de sortie subsiste tant que le dispositif décélérométrique 64 n'a pas encore fonctionné.

En effet, lors du freinage, le véhicule subit une décélération, et la masse d'inertie 72 est soumise à une force d'inertie dirigée dans le sens de la flèche A. Tant que cette force reste inférieure à la force de rappel exercée par le ressort 94, la masse d'inertie reste immobile et l'obturateur de valve 92 reste éloigné de son siège 90. Par contre, lorsque cette force d'inertie dépasse la force du ressort 94, la masse d'inertie se déplace pour amener l'obturateur 92 de la valve pilote en contact avec son siège 90.

Lorsque cela se produit, un volume donné de liquide se trouve emprisonné dans le volume 84, le passage 86 et la chambre pilote 52. De ce fait, le piston pilote 48 n'est plus susceptible de se déplacer en direction du piston correcteur 30, et tout accroissement ultérieur de la pression d'entrée à l'orifice 36 provoque le déplacement du piston de correcteur vers le piston pilote, ce qui provoque la réouverture de la valve à bille 46. Cette réouverture de la valve 46 permet d'admettre une petite quantité de fluide vers la chambre de sortie 42, dont résulte un accroissement de la pression de sortie qui repousse le piston 30 jusqu'à la fermeture de la valve 46. Cependant, compte tenu des diverses surfaces du piston 30 soumises aux diverses pressions en présence, l'accroissement de la pression de sortie est inférieur à l'accroissement de la pression d'entrée. A partir de cet instant débute la troisième phase du fonctionnement du correcteur, durant laquelle la pression de sortie subit un accroissement inférieur à l'accroissement de la pression d'entrée par un processus d'ouvertures et de fermetures successives de la valve 46.

Si l'on se reporte maintenant au fonctionnement du dispositif décélérométrique 64, on constate que la décélération nécessaire pour provoquer la fermeture de l'obturateur 92, qui est fixée par la force du ressort 94, est une fonction directement proportionnelle de la pression de freinage. En effet, le déplacement du piston de correcteur 30 en direction de la chambre atmosphérique 58, est directement proportionnel à la pression d'entrée reçue à l'orifice 36. Par voie de conséquence, le ressort 94, emprisonné entre le prolongement 56 du piston et la masse d'inertie 72, exerce sur cette dernière une force de rappel qui varie proportionnellement avec la pression d'entrée.

De la sorte, la décélération nécessaire pour provoquer la fermeture de la valve 92 et déclencher la troisième phase du fonctionnement du correcteur, c'est-à-dire la phase durant laquelle la pression de sortie ne peut augmenter que d'une quantité proportionnellement inférieure à l'augmentation de la pression d'entrée, est elle-même proportionnelle à cette pression d'entrée. De la sorte, le déclenchement de la troisième phase du fonctionnement du correcteur se produira toujours à partir d'une pression optimale compte tenu de l'état de charge du véhicule. A cet égard, on pourra avantageusement se référer à la demande de brevet FR No 2437962, déjà citée.

On remarquera que la mise à profit selon l'invention du déplacement du piston de correcteur 30 pour modifier la force du ressort 94 permet une simplification notable en comparaison du système connu de la demande de brevet mentionnée ci-avant.

Selon une caractéristique annexe de l'invention le corps 66 du dispsotif décélérométrique 64 est fixé au boîtier 26 du correcteur par une liaison filetée; cette disposition permet de faire varier de manière simple le tarage à vide du ressort 94.

Selon une variante non représentée de l'invention le ressort de rappel de la masse d'inertie peut être attaqué par un système de renvoi mécanique lui-même actionné par le piston de correcteur. Une telle variante permettra par exemple un mode de réalisation compact dans lequel le piston de correcteur et la masse d'inertie sont montés en parallèle au lieu d'être montés en alignement comme il vient d'être décrit.

Enfin, il sera utile de décrire le fonctionnement du correcteur 20 lors du relâchement de la pression de freinage.

En un premier temps, la baisse de pression dans la chambre d'entrée 38 provoque le recul du piston 30 vers la chambre d'entrée et une baisse de pression correspondante dans la chambre de sortie 42 et dans la chambre pilote 52. Lorsque la pression de sortie devient à nouveau égale à la pression d'entrée, voire supérieure si la chute de pression à l'entrée est rapide, la bille 46 de la valve de correcteur se soulève de son siège pour permettre un retour direct du fluide de la chambre de sortie vers la chambre d'entrée via le passage 44. Entre-temps, la décélération du véhicule ayant diminué, la valve pilote 90-92, soumise de part et d'autre à des pressions égales, est alors rappelée en ouverture par le ressort 94, provoquant l'échappement du fluide depuis la chambre pilote 52 vers l'orifice d'entrée 36. Dans cette situation, on remarquera que le joint à lèvre 49 qui équipe le piston pilote 48 se décolle de la paroi d'alésage 28c pour fournir un trajet préférentiel au fluide en retour depuis les moteurs de frein arrière 24 vers l'orifice d'entrée 36 via la chambre pilote 52, le passage 86, le volume 84, le passage 88, la cavité 70, le volume 80 et le passage 82. Cette particularité est mise à profit pour effectuer une purge automatique du correcteur des bulles d'air qui peuvent s'y trouver emprisonnées lors du remplissage, sans qu'il soit besoin d'équiper le correcteur d'une vis de purge à cet effet. De plus, le jet de liquide émergeant du passage 88 vers la cavité 70 étant dirigé vers la masse d'inertie 72 permet de repousser cette dernière et confirmer l'ouverture de la valve pilote 90, 92.

**Revendications**

1. Correcteur de freinage pour véhicule automobile, du type asservi à la décélération, comprenant un boîtier (26) dans lequel sont définies une chambre d'entrée (38), une chambre de sortie (42) et une chambre pilote (52, 84), un piston de correcteur (30) s'étendant dans la chambre d'entrée (38) et dans la chambre de sortie (42) et étant rappelé vers cette dernière par un ressort de correcteur (62), un premier passage (44) entre la chambre d'entrée et la chambre de sortie équipé d'une valve de correcteur (46) commandée par ledit piston de correcteur (30), un piston pilote (48) s'étendant dans la chambre de sortie et dans la cambre pilote et commandant également ladite valve de correcteur (46), un second passage (82, 78, 88, 86) entre la chambre d'entrée (38) et la chambre pilote (52, 84) équipé d'une valve pilote (90, 92) commandée par un dispositif décélérométrique (64), ledit dispositif comprenant une masse (72) sensible à la décélération du véhicule et rappelée par des moyens élastiques (94) vers une position correspondant à l'ouverture de ladite valve pilote, et des moyens sensibles à la pression de freinage pour modifier le tarage desdits moyens élastiques en fonction de cette pression, caractérisé en ce que lesdits moyens élastiques (94) sont interposés entre ledit piston de correcteur (30) et ladite masse (72) sensible à la décélération.

2. Correcteur de freinage selon la revendication 1, caractérisé en ce que ladite masse (72) sensible à la décélération et ledit piston de correcteur (30) sont disposés en alignement et que lesdits moyens élastiques (94) consistent en un ressort en appui, d'une part, sur ladite masse et, d'autre part, sur un prolongement (56) dudit piston de correcteur.

3. Correcteur de freinage selon la revendication 2, caractérisé en ce que ladite masse (72) et ladite valve pilote (90, 92) sont disposées dans un corps monté dans ledit boîtier (26) et axialement mobile par rapport audit piston de correcteur.

4. Correcteur de freinage selon l'une des revendications 2 ou 3, caractérisé en ce que ledit boîtier (26) comprend un unique alésage à gradins (28) dans lequel sont reçus ladite masse d'inertie (72), ledit piston de correcteur (30) et ledit piston pilote (48).

5. Correcteur de freinage selon l'une des revendications précédentes, caractérisé en ce que ledit piston pilote (48) est équipé d'un joint à lèvre (49) permettant un libre écoulement du fluide depuis ladite chambre de sortie vers ladite chambre pilote.

## Patentansprüche

1. Auf Verzögerung ansprechender Bremskraftregler für ein Kraftfahrzeug, mit einem Gehäuse (26), in dem eine Einlasskammer (38), eine Auslasskammer (42) und eine Vorsteuerkammer (52, 84) gebildet sind, wobei ein Regelkolben (30) in der Einlasskammer (38) und der Auslasskammer (42) angeordnet und in Richtung auf die letztere durch eine Regelfeder (62) vorgespannt ist, einem zwischen der Einlass- und Auslasskammer angeordneten ersten Kanal (44), der mit einem von dem Regelkolben (30) gesteuerten Regelventil (46) versehen ist, einem Vorsteuerkolben (48), der in der Auslasskammer und der Vorsteuerkammer angeordnet ist und ebenfalls das Regelventil (46) steuert, einem zwischen der Einlasskammer (38) und der Vorsteuerkammer (52, 84) angeordneten zweiten Kanal (82, 78, 88, 86), der mit einem von einer Verzögerungseinrichtung (64) gesteuerten Vorsteuerventil (90,92) versehen ist, wobei die Verzögerungseinrichtung eine auf die Verzögerung des Fahrzeugs ansprechende Trägheitsmasse (72) aufweist, die von elastischen Mitteln (94) in Richtung auf eine Stellung vorgespannt ist, die der Öffnungsstellung des Vorsteuerventiles entspricht, und Mitteln, die auf den Bremsdruck ansprechen, um die Vorspannung der elastischen Mittel in Abhängigkeit von diesem Druck zu ändern, dadurch gekennzeichnet, dass die elastischen Mittel (94) zwischen dem Regelkolben (30) und der Trägheitsmasse (72) angeordnet sind.

2. Bremskraftregler nach Anspruch 1, dadurch gekennzeichnet, dass die Trägheitsmasse (72) und der Regelkolben (30) zueinander ausgerichtet sind und die elastischen Mittel (94) aus einer Feder bestehen, die einerseits an der Trägheitsmasse und andererseits an einer Verlängerung (56) des Regelkolbens abgestützt ist.

3. Bremskraftregler nach Anspruch 2, dadurch gekennzeichnet, dass die Trägheitsmasse (72) und das Vorsteuerventil (90, 92) in einem Körper angeordnet sind, der im Gehäuse (26) angebracht und bezüglich des Regelkolbens axial beweglich ist.

4. Bremskraftregler nach einem der beiden Ansprüche 2 oder 3, dadurch gekennzeichnet, dass das Gehäuse (26) eine einzige Stufenbohrung (28) aufweist, in der die Trägheitsmasse (72), der Regelkolben (30) und der Vorsteuerkolben (48) angeordnet sind.

5. Bremskraftregler nach einem der vorhergehenden Ansprüche, dadurch gekennzeichnet, dass der Vorsteuerkolben (48) mit einer Lippendichtung (49) versehen ist, die eine freie Strömung von der Auslasskammer zur Steuerkammer ermöglicht.

## Claims

1. A deceleration responsive brake regulator for automotive vehicles, comprising a casing (26) defining an inlet chamber (38), an outlet chamber (42) and a pilot chamber (52, 84), a regulator piston (30) extending in the inlet chamber (38) and in the outlet chamber (42) and being biassed towards the latter by a regulator spring (62), a first passage (44) between the inlet chamber and the outlet chamber and provided with a regulator valve (46) controlled by said regulator piston (30), a pilot piston (48) extending in the outlet chamber and in the pilot chamber and also controlling said regulator valve (46), a second passage (82, 78, 88, 86) between the inlet chamber (38) and the pilot chamber (52, 84) provided with a pilot valve (90, 92) controlled by a deceleration device (64), said device comprising a mass (72) responsive to deceleration of the vehicle and biassed by resilient means (94) towards a position corresponding to the opening of said pilot valve, and means responsive to the brake pressure for modifying the biassing of said resilient means in response to said pressure, characterized in that said resilient means (94) are interposed between said regulator piston (30) and said mass (72) responsive to deceleration.

2. The brake regulator of Claim 1, characterized in that said mass (72) responsive to deceleration and said regulator piston (30) are aligned and in that said resilient means (94) comprise a spring supported against said mass on the one hand and against an extension (56) of said regulator piston on the other hand.

3. The brake regulator of Claim 2, characterized in that said mass (72) and said pilot valve (90, 92) are disposed in a body mounted in said casing (26) and axially movable with respect to said regulator piston.

4. The brake regulator according to Claim 2 or 3, characterized in that said casing (26) comprises a single stepped bore (28) receiving said inertia mass (72), said regulator piston (30), and said pilot piston (48).

5. The brake regulator of any of the preceding claims, characterized in that said pilot piston (48) is provided with a lip seal (49) permitting free fluid flow from said outlet chamber to said pilot chamber.